# EUROPÄISCHE PATENTSCHRIFT

(11) **EP 1 401 170 B1**
(45) Veröffentlichungstag und Bekanntmachung des Hinweises auf die Patenterteilung: **14.11.2007**
(21) Anmeldenummer: 03020071.1
(22) Anmeldetag: 04.09.2003
(51) Int. Cl.: H04L 29/06

(54) **Elektronische Vorrichtung für ein Bussystem**
Electronic apparatus for a bussystem
Dispositif électronique pour un système bus

(30) Priorität: 20.09.2002 DE 10243783
(43) Veröffentlichungstag der Anmeldung: 24.03.2004
(73) Patentinhaber: SICK AG, 79183 Waldkirch (DE)
(72) Erfinder: Fehrer, Detlef, Dr., 79194 Gundelfingen (DE); Heidepriem, Sebastian, 79395 Neuenburg (DE); Stadler, Edgar, 79312 Emmendingen (DE)
(74) Vertreter: Manitz, Finsterwald & Partner GbR

(56) Entgegenhaltungen:
- WO-A-02/23364
- US-A- 5 812 768
- US-A- 5 896 383

## Beschreibung

Die vorliegende Erfindung betrifft eine einen Sensor, oder einen Aktor bildende elektronische Vorrichtung mit einem Steuerabschnitt sowie einer integrierten Busschnittstelle, über die die Vorrichtung an einen Datenbus zur Kommunikation der Vorrichtung mit zumindest einer weiteren an dem Datenbus angeschlossenen Vorrichtung anschließbar ist, wobei die Kommunikation, d. h. das Senden und/oder Empfangen von Daten über den Datenbus, über ein beliebiges vorgegebenes Kommunikationsprotokoll (Busprotokoll) erfolgt.

In vielen Einsatzgebieten der Automatisierungstechnik kommunizieren heutzutage unterschiedliche Geräte über ein Bussystem miteinander. Dabei ist eine Vielzahl von unterschiedlichen Bussystemen basierend auf unterschiedlichen Kommunikationsprotokollen bekannt. Beginnend beim physikalischen Layer bis hin zur Anwendungsschnittstelle der einzelnen Geräte sind die Feldbusspezifikationen entsprechend ihrem Einsatzgebiet jeweils spezifisch definiert.

Um eine Kommunikation für eine Vielzahl von unterschiedlichen Busprotokollen zu ermöglichen, ist es für die Gerätehersteller zwingend, dass sie für jedes Gerät (Sensor, Aktor oder Steuerung) für jedes Feldbusprotokoll jeweils eine eigene Implementierung der auf dem Gerät laufenden Anwendung (Applikation) realisieren müssen. Aufgrund der verschiedenen Konzepte unterschiedlicher Feldbusse ist eine interoperable Datenkommunikation nicht möglich.

Um jedes Gerät mit jedem Feldbus verwenden zu können, kann der Gerätehersteller entweder jedes Gerät in unterschiedlichen Varianten, jeweils für einen speziellen Feldbus, zur Verfügung stellen, oder die Geräte mit einer Vielzahl von unterschiedlichen Busschnittstellen ausstatten, um auf diese Weise jeweils nur ein Gerät pro Modell vorsehen zu müssen.

Nachteilig an beiden Varianten ist jedoch, dass die in dem Gerät jeweils laufende Anwendung nicht nur spezifisch für das Gerät, sondern insbesondere auch spezifisch für das jeweils verwendete Feldbusprotokoll entwickelt werden muss. Im zuerst genannten Fall ist die Entwicklung einer Vielzahl von unterschiedlichen Anwendungen für einen Gerätetyp erforderlich, während im zweiten Fall nur zwar eine Anwendung entwickelt werden muss, diese jedoch fähig sein muss, mit jedem der benötigten Feldbusprotokolle kommunizieren zu können. Je mehr Bussysteme existieren und abgedeckt werden müssen, umso höher sind die Entwicklungs- und Herstellungskosten entsprechender Geräte. Dies ist in vielen Fällen nicht mehr wirtschaftlich, so dass eine Reduzierung der Kosten bei der Entwicklung und Herstellung der Geräte gewünscht ist.

Da die Bussysteme nicht von den Geräteherstellern, sondern je nach Einsatzgebiet von den Kunden vorgegeben werden, muss gewährleistet sein, dass die Geräte mit einer Vielzahl von unterschiedlichen Bussystemen zusammenarbeiten können.

Nachteilig an der Vielzahl von unterschiedlichen Bussystemen ist es auch, dass für eine Konfiguration und Diagnose (Parametrierung) der Geräte, die üblicherweise über das Bussystem erfolgt, jeweils eine eigene Bediensoftware zur Verfügung gestellt werden muss, die ebenfalls an die verschiedenen Bussysteme und ihre jeweilige Adressierung angepasst sein muss, was zusätzlichen Aufwand und damit verbundene Kosten verursacht.

Weiterhin wird in vielen Feldbussystemen die Zuordnung von Parametern und Funktionen zu konkreten Variablen, Adressen oder Kanälen in so genannten Profilen vorgenommen. Diese Profile sind nicht nur vom jeweiligen Feldbus, sondern auch von dem jeweiligen Einsatzgebiet abhängig. Soll ein Gerät in verschiedenen Applikationsfeldern eingesetzt werden, so muss in jedem Einzelfall eine Anpassung der Applikation an das betreffende Profil vorgenommen werden. Dies gilt insbesondere auch dann, wenn die dem Profil zugrunde liegende Norm verändert wird.

Die Anpassung der jeweiligen Applikation an unterschiedliche Feldbusprotokolle erfordert bei den jeweiligen Entwicklergruppen Spezialwissen über die einzelnen Feldbusse. Da üblicherweise für jeden Feldbus eigene Spezialisten in den Entwicklungsabteilungen vorhanden sind, ist somit im Falle einer Anpassung der Applikation ein hoher personeller Aufwand erforderlich.

Aus der WO 02/23364 A ist ein Datenaccessserver bekannt, über den eine Vielzahl von Clients angeschlossen werden können, welche eine Vielzahl von unterschiedlichen Datenaustauschprotokollen verwenden.

Es ist eine Aufgabe der Erfindung, eine kostengünstige und flexible Lösung anzugeben, mit der unterschiedliche elektronische Vorrichtungen der eingangs genannten Art (Sensoren, Aktoren oder Steuerungen) an unterschiedlichste Bussysteme mit verschiedenen Busprotokollen anschließbar sind. Dabei soll auch die Anpassung einer Applikation bei einer Änderung eines Profils problemlos möglich sein. Weiterhin soll auch der Aufwand für die Konfiguration und Diagnose der einzelnen Geräte verringert werden.

Diese Aufgabe wird erfindungsgemäß ausgehend von einer elektronischen Vorrichtung der eingangs genannten Art dadurch gelöst, dass der Steuerabschnitt einen Anwendungs-spezifischen Abschnitt und einen Busprotokoll-spezifischen Abschnitt umfasst, die voneinander entkoppelt sind und über eine vorgegebene, standardisierte Schnittstelle Anwendungs-spezifische Daten austauschen, dass der Busprotokoll-spezifische Abschnitt zum Senden und/oder Empfangen von Daten über die Busschnittstelle ausgebildet ist, dass der Anwendungs-spezifische Abschnitt für die Steuerung der Vorrichtung unabhängig vom verwendeten Busprotokoll ausgebildet ist und dass durch den Busprotokoll-spezifischen Abschnitt über die standardisierte Schnittstelle empfangene Daten in das Busprotokoll und/oder über die Busschnittstelle empfangene Daten in entsprechende Anwendungs-spezifische Daten umgesetzt werden.

Erfindungsgemäß erfolgt somit eine Kapselung der in dem Steuerabschnitt der elektronischen Vorrichtung laufenden Applikation und somit eine Trennung der Applikation (Businesslogik) von der Kommunikationslogik des Gerätes.

Diese Entkopplung bringt mehrere Vorteile. Zum einen kann der Anwendungs-spezifische Abschnitt (Applikation) unabhängig von dem jeweils zu verwendenden Busprotokoll entwickelt werden, da die Kommunikation zwischen dem Anwendungs-spezifischen Abschnitt und dem Busprotokoll-spezifischen Abschnitt über eine standardisierte Schnittstelle erfolgt. Soll das Gerät für eine Vielzahl von unterschiedlichen Bussystemen einsetzbar sein, so ist lediglich die Entwicklung von jeweils unterschiedlichen, an das jeweilige Bussystem angepassten Busprotokoll-spezifischen Abschnitten erforderlich. Eine Änderung des Anwendungs-spezifischen Abschnittes ist in diesem Fall nicht erforderlich.

Zum anderen können auch erforderliche Änderungen an der Applikation, die beispielsweise aufgrund eines geänderten Profils erforderlich werden, unabhängig vom jeweils verwendeten Busprotokoll vorgenommen werden. Somit benötigt der für die Änderung zuständige Entwickler keine das jeweilige Busprotokoll betreffenden Spezialkenntnisse, so dass ein und derselbe Entwickler Applikationen anpassen kann, die für eine Vielzahl von unterschiedlichen Busprotokollen Einsatz finden.

Weiterhin ist es erfindungsgemäß möglich, Geräteparameter unabhängig von der jeweiligen Feldbusimplementierung zu adressieren, so dass die Anbindung an eine Konfigurations- und Diagnosesoftware vereinfacht wird. Dazu ist es lediglich erforderlich, dass eine entsprechende Konfigurationsvorrichtung ebenfalls in der Art einer erfindungsgemäßen elektronischen Vorrichtung ausgebildet ist, wobei der Anwendungs-spezifische Abschnitt der Konfigurationsvorrichtung einen Konfigurationsabschnitt bildet, dessen standardisierte Schnittstelle gleich der standardisierten Schnittstelle der zu konfigurierenden Vorrichtung ist. Auf diese Weise ist gewährleistet, dass die zu konfigurierende Vorrichtung und die Konfigurationsvorrichtung jeweils die gleiche interne feldbusunabhängige Adressierung besitzen. Wie bei der zu konfigurierenden Vorrichtung muss auch in der Konfigurationsvorrichtung jeweils nur der für die Kommunikation zuständige Busprotokoll-spezifische Abschnitt für jedes zu unterstützende Feldbusprotokoll implementiert werden, während der Anwendungs-spezifische Abschnitt, d.h. der Konfigurationsabschnitt der Konfigurationsvorrichtung unabhängig von dem verwendeten Feldbusprotokoll einsetzbar ist.

Nach einer vorteilhaften Ausführungsform der Erfindung umfasst der Steuerabschnitt mehrere Busprotokoll-spezifische Abschnitte, von denen jeder jeweils einem von einer Vielzahl von unterschiedlichen Busprotokollen zugeordnet ist, wobei jeder Busprotokoll-spezifische Abschnitt jeweils zur Umsetzung der Anwendungs-spezifischen Daten in das ihm zugeordnete Busprotokoll und/oder zur Umsetzung der über die Busschnittstelle in dem ihm zugeordneten Busprotokoll empfangenen Daten in die Anwendungs-spezifischen Daten ausgebildet ist. Auf diese Weise kann eine erfindungsgemäß ausgebildete Vorrichtung für eine Vielzahl von unterschiedlichen Busprotokollen eingesetzt werden, ohne dass der jeweilige Busprotokoll-spezifische Abschnitt beim Wechsel des verwendeten Bussystems durch einen entsprechend geänderten Busprotokoll-spezifischen Abschnitt ersetzt werden muss.

Vorteilhaft ist jedem Busprotokoll-spezifischen Abschnitt eine unterschiedliche Busschnittstelle zugeordnet. Da üblicherweise die unterschiedlichen Bussysteme durch unterschiedliche physikalische Schnittstellen (Steckverbindungen und Umsetzer) gekennzeichnet sind, ist es erforderlich, jede erfindungsgemäße elektronische Vorrichtung mit einer Vielzahl von entsprechenden Steckverbindungen auszurüsten. In diesem Fall kann jeder Busprotokoll-spezifische Abschnitt unmittelbar der entsprechenden physikalischen Busschnittstelle zugeordnet sein, so dass durch Anschließen des Gerätes an das jeweilige Bussystem automatisch der jeweils zugewiesene Busprotokoll-spezifische Abschnitt verwendet wird.

Grundsätzlich ist es auch möglich, dass nach einer weiteren vorteilhaften Ausführungsform zumindest ein Teil oder alle Busprotokoll-spezifischen Abschnitte einer einzigen Busschnittstelle zugeordnet sind und dass eine Auswahleinheit zur Auswahl des jeweils zu verwendenden Busprotokoll-spezifischen Abschnittes vorgesehen ist. Dabei ist es sowohl möglich, dass über die Auswahleinheit eine manuelle Auswahl des Busprotokoll-spezifischen Abschnittes erfolgt oder dass die Auswahleinheit des Busprotokoll-spezifischen Abschnittes automatisch abhängig von dem jeweils aktuell verwendeten Busprotokoll erfolgt. Diese Ausbildungsform ist insbesondere dann sinnvoll, wenn unterschiedliche Bussysteme über einheitliche physikalische Schnittstellen (eventuell mit Adapter) an die erfindungsgemäße elektronische Vorrichtung anschließbar sind.

Nach einer weiteren vorteilhaften Ausführungsform der Erfindung ist für die Kommunikation mit dem Steuerabschnitt eine Menge von Elementen vorgegeben, die jeweils eine Art von zulässigen Anwendungs-spezifischen Daten definieren. Insbesondere sind als Elemente Variablen und/oder Methoden und/oder Nachrichten und/oder Ereignisse vorgegeben.

Erfindungsgemäß wird somit für die Definition der standardisierten Schnittstelle eine objektorientierte Struktur zugrunde gelegt. Bei den genannten Methoden kann es sich dabei um Methoden handeln, die auf dem jeweiligen Gerät selbst oder auf einem anderen Gerät ausgeführt werden. Methoden, die auf dem Gerät selbst aufgerufen werden, führen üblicherweise eine spezielle Funktion aus, die entweder dazu dienen kann, dass das Gerät eine vorgegebene Aktion ausführt oder dass ein spezielles Ergebnis der Funktion als Rückgabewert erhalten wird. Es ist ebenfalls möglich, dass sowohl eine Aktion ausgeführt als auch ein Rückgabewert erhalten wird. Bei Nachrichten handelt es sich um Elemente, die entweder empfangen oder verschickt werden. Sowohl von den Methoden als auch von den Nachrichten sind je nach Anwendungsfall nicht immer alle angegebenen Kategorien notwendigerweise zu realisieren.

Bei den Variablen handelt es sich um gemeinsam benutzte Elemente, die im Gegensatz zu den Methoden und Nachrichten bidirektional sind. Die Variablen müssen einen Typ besitzen, der eindeutig definiert sein muss. Insbesondere muss beispielsweise die Länge (Byte) der Variable (beispielsweise Länge eines Integerwertes) sowie die Art seiner Serialisierung definiert sein.

Neben den üblichen Basistypen kann der Typ der Variable weiterhin beispielsweise eine Struktur oder ein Array sein. Die Struktur oder das Array besitzen wiederum untergeordnete Typdefinitionen, welche ebenfalls wieder Strukturen, Arrays oder einfache Typen (Basistypen) sein können. Wesentlich ist dabei, dass auf der untersten Definitionsebene nur Basistypen Verwendung finden dürfen.

Für die Übertragung der Variablen über das Bussystem wird ein Algorithmus vorgegeben, der die Serialisierung und Deserialisierung von Basistypen und komplexen Datenstrukturen festlegt sowie definiert, wie zur Laufzeit Typinformationen miteinander verglichen oder identifiziert werden können.

Methoden besitzen eine Rückgabewert sowie eine endliche Anzahl von Parametern. Dabei werden der Typ des Rückgabewertes sowie die Typen der einzelnen Parameter analog zur Typdefinition gemeinsam genutzter Variablen definiert. Ebenso wird deren Übertragung als Byte-Strom über das Bussystem analog wie bei den Variablen behandelt.

Zur Optimierung der Kapselung der Applikation können noch weitere Eigenschaften zur Beschreibung der Variablen und Methoden herangezogen werden. Dies können beispielsweise folgende Eigenschaften sein:
- die Kommunikationsrichtung von Variablen,
- die Übertragungseigenschaften von Methoden,
- die Eindeutigkeit des Methodenaufrufes,
- die Eindeutigkeit der Ergebnisübertragung,
- Methoden ohne Rückinformation (diese speziellen Methoden werden üblicherweise Ereignisse oder Events genannt),
- die Priorisierung von Kommunikationsobjekten.

Mit der erfindungsgemäß ausgebildeten Konfigurationsvorrichtung sind vorteilhaft Anwendungs-spezifische vorgegebene Einstellungen der zu konfigurierenden Vorrichtungen auslesbar und/oder setzbar. Damit kann die Konfigurationsvorrichtung sowohl zum Konfigurieren als auch für eine Diagnose einer erfindungsgemäß ausgebildeten elektronischen Vorrichtung verwendet werden. Bevorzugt sind die Konfigurationsvorrichtung als Computer, insbesondere als üblicher Personalcomputer oder Handheld (PDA), und der Konfigurationsabschnitt sowie der Busprotokoll-spezifische Abschnitt jeweils als Computerprogramme ausgebildet. Soll anstelle des bisher verwendeten Busprotokolls ein davon unterschiedliches Busprotokoll verwendet werden, so muss lediglich das Computerprogramm, welches den Busprotokoll-spezifischen Abschnitt darstellt, an das neue Busprotokoll angepasst werden. Eine Änderung des eigentlichen Konfigurationsprogramms ist nicht erforderlich. Insbesondere ist somit die Oberfläche des Konfigurationsprogramms unabhängig von dem verwendeten Busprotokoll, so dass der Anwender mühelos einen Wechsel von einem Bussystem zu einem anderen Bussystem vornehmen kann.

Für die vollständige Integration der erfindungsgemäß ausgebildeten Geräte in einen Feldbus ist es vorteilhaft, wenn zusätzlich zu der feldbusunabhängigen Kommunikation noch eine Implementierung der wichtigsten Elemente nach Vorgabe der Feldbusprofile vorgenommen wird. Da die Anzahl der Elemente, welche von Kunden in eigenen Programmen oder fremden Programmen üblicherweise genutzt werden, sehr viel kleiner ist als die im Gerät vorliegende Anzahl von Elementen (Variablen/Funktionen) ist es möglich, die von den Anwendern üblicherweise häufig verwendeten Elemente über geräteherstellerspezifische Adressierungskanäle, die den Anwendern vertraut sind, anzusprechen.

Für jeden Busprotokoll-spezifischen Abschnitt existieren erfindungsgemäß für unterschiedliche Feldbusse Algorithmen zum Lesen und Schreiben von Variablen, Algorithmen zum Aufrufen von Methoden auf dem Gerät oder auf einem anderen Gerät und Algorithmen, die das Gerät an ein weiters Gerät, beispielsweise einen Master oder einen bestimmten Teilnehmer des Netzwerkes versendet.

Weitere vorteilhafte Ausführungsformen der Erfindung sind in den Unteransprüchen angegeben.

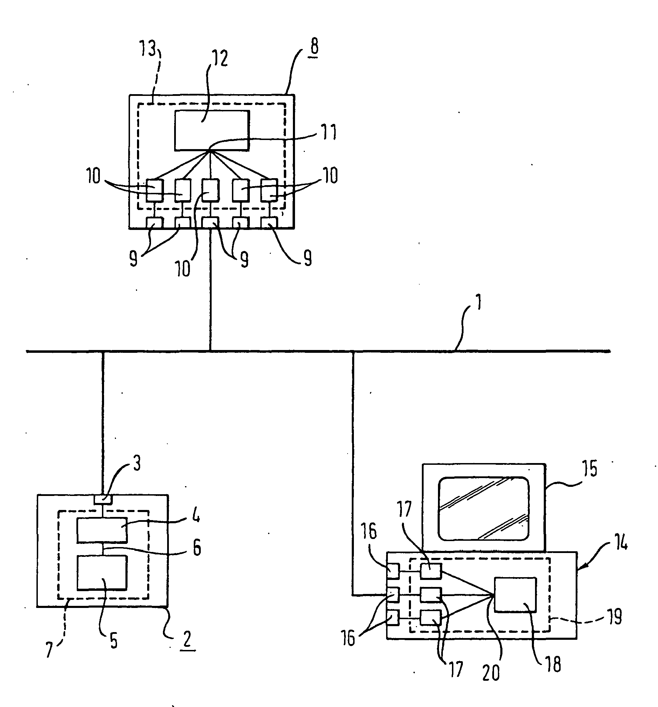

Die Erfindung wird nachfolgend anhand eines Ausführungsbeispiels unter Bezugnahme auf die einzige Figur erläutert. Die Figur zeigt ein schematisiertes Blockdiagramm eines erfindungsgemäß ausgebildeten Bussystems, mit einem Datenbus 1, an den einen Sensor, einen Aktor oder eine Steuerung bildendes Gerät 2 angeschlossen ist. Das Gerät 2 besitzt dazu eine integrierte Busschnittstelle 3, die zum Anschluss an den Datenbus 1 ausgebildet ist.

In dem Gerät 2 ist ein üblicherweise als Programm ausgebildeter Busprotokoll-spezifischer Abschnitt 4 ausgebildet, der mit der Schnittstelle 3 verbunden und zum Senden und/oder Empfangen von Daten über die Busschnittstelle 3 ausgebildet ist. Der Busprotokoll-spezifische Abschnitt 4 ist somit ausgebildet, sowohl über den Datenbus 1 empfangene, im verwendeten Busprotokoll vorliegende Daten zu empfangen als auch gegebenenfalls Daten in diesem Format zu senden.

Weiterhin ist in dem Gerät 2 ein von dem Busprotokoll-spezifischen Abschnitt 4 entkoppelter Anwendungs-spezifischer Abschnitt 5 vorgesehen, der über eine standardisierte Schnittstelle 6 Anwendungs-spezifische Daten mit dem Busprotokoll-spezifischen Abschnitt 4 austauscht. Auch dieser Abschnitt 5 ist üblicherweise als Programm realisiert.

Der Anwendungs-spezifische Abschnitt 5 bildet die so genannte Applikation des Gerätes 1 und ist von dem jeweils verwendeten Busprotokoll des Datenbusses 1 unabhängig. Der Busprotokoll-spezifische Abschnitt 4 bildet zusammen mit dem Anwendungs-spezifischen Abschnitt 5 einen Steuerabschnitt 7 des Gerätes 2, mit dem die Funktion sowie die Kommunikation des Gerätes 2 durchgeführt wird.

Die Figur zeigt weiterhin ein zweites Gerät 8, dessen Aufbau sehr ähnlich zu dem Aufbau des Gerätes 2 ausgebildet ist. Das Gerät 8 unterscheidet sich von dem Gerät 2 dadurch, dass anstelle einer einzigen internen Schnittstelle 3 mehrere interne Schnittstellen 9 vorgesehen sind. Jede der internen Schnittstellen 9 ist dabei zur Ankopplung an ein anderes Bussystems ausgebildet.

In dem Gerät 8 ist weiterhin für jede interne Schnittstelle 9 ein separater Busprotokoll-spezifischer Abschnitt 10 vorgesehen, der jeweils zum Empfangen und/oder Aussenden von Daten über das jeweils der internen Schnittstelle 9 zugeordnete Busprotokoll ausgebildet ist.

Jeder der Busprotokoll-spezifischen Abschnitte 10 ist über dieselbe, einheitliche, standardisierte Schnittstelle 11 mit einem Anwendungs-spezifischen Abschnitt 12 verbunden, der zusammen mit den unterschiedlichen Busprotokoll-spezifischen Abschnitten 10 wiederum einen Steuerabschnitt 13 des Gerätes 8 bildet.

Während das Gerät 2 zwar grundsätzlich dafür geeignet ist, auch bei einem Wechsel des Busprotokolls Verwendung zu finden, indem lediglich der Busprotokoll-spezifische Abschnitt 4 entsprechend neu implementiert wird, wobei vorausgesetzt ist, dass sich das entsprechende Bussystem über die Schnittstelle 3 gegebenenfalls mit einem Adapter an das Gerät 2 anschließen lässt, besitzt das Gerät 8 demgegenüber den Vorteil, dass es bereits für eine Vielzahl von unterschiedlichen Busprotokollen vorbereitet ist. Durch die Wahl der entsprechenden internen Schnittstelle 3 zum Anschließen des Bussystems wird automatisch der richtige Busprotokoll-spezifische Abschnitt 10 aktiviert und das Gerät 8 in Funktion versetzt.

Die Kommunikation zwischen dem Gerät 2 und dem Gerät 8 erfolgt erfindungsgemäß über die gleiche standardisierte Schnittstelle 6, 11 indem jeweils die beiden Anwendungs-spezifischen Abschnitte 5, 12 der beiden Geräte 2, 8 standardisierte Anwendungs-spezifische Daten verschicken beziehungsweise empfangen, welche von den Busprotokoll-spezifischen Abschnitten 4, 9 jeweils in das richtige Busprotokoll des Datenbusses 1 umgesetzt werden.

Weiterhin ist in der Figur ein an den Datenbus 1 angeschlossenes Gerät 14 dargestellt, das als Personalcomputer ausgebildet ist. Das Gerät 14 besitzt eine Anzeigeeinheit 15 sowie mehrere interne Schnittstellen 16, die jeweils zum Anschluss an unterschiedliche Datenbusse 1 ausgebildet sind und beispielsweise durch eine oder mehrere Einsteckkarten realisiert sein können.

Weiterhin umfasst das Gerät 14 eine Vielzahl von Busprotokoll-spezifischen Abschnitten 17, von denen jeder einer der internen Schnittstellen 16 zugeordnet ist. Wie bereits zu dem Gerät 8 beschrieben, ist jeder der Busprotokoll-spezifischen Abschnitte 17 zum Senden und/oder Empfangen von Daten in einem anderen Busprotokoll ausgebildet.

Die Busprotokoll-spezifischen Abschnitte 17 sind wiederum über eine einheitliche, standardisierte Schnittstelle 20 mit einem Anwendungs-spezifischen Abschnitt 18 verbunden, der als Kommunikations- und/oder Diagnosesoftware ausgebildet ist und zusammen mit den Busprotokoll-spezifischen Abschnitten 17 einen Steuerabschnitt 19 des Gerätes 14 bildet. Über das Konfigurations-/Diagnoseprogramm 18 können somit in gleicher Weise, wie vorher zu den Geräten 2 und 8 beschrieben, standardisierte Anwendungs-spezifische Daten über den Datenbus 1 zu jedem der an dem Datenbus 1 angeschlossenen Geräte 2, 8 gesandt werden. Auf diese Weise ist sowohl das Auslesen als auch das Setzen von Parametern innerhalb der Geräte 2 und 8 über die Konfigurations-/Diagnosesoftware 18 möglich, ohne dass die Konfigurations-/Diagnosesoftware 18 speziell auf das verwendete Busprotokoll zugeschnitten sein muss.

Wird der Datenbus 1 durch einen Datenbus ersetzt, auf dem ein anderes Busprotokoll verwendet wird, so braucht lediglich das Gerät 14 mit dem neuen Datenbus über die diesem Datenbus entsprechende interne Schnittstelle verbunden werden. Nach der Ankoppelung kann der Benutzer unmittelbar mit der selben Konfigurations-/Diagnosesoftware 18 die an den neuen Datenbus angeschlossenen Geräte konfigurieren, ohne dass eine Neuimplementierung oder Änderung der Konfigurations-/Diagnosesoftware 18 erforderlich wäre.

## Patentansprüche

1. Einen Sensor oder einen Aktor bildende elektronische Vorrichtung (2, 8, 14) mit einem Steuerabschnitt (7, 13, 19) sowie einer integrierten Busschnittstelle (3, 9, 16), über die die Vorrichtung (2, 8, 14) an einen Datenbus (1) zur Kommunikation der Vorrichtung (2, 8, 14) mit zumindest einer weiteren an dem Datenbus angeschlossenen, einen Sensor oder einen Aktor bildenden Vorrichtung (2, 8, 14) anschließbar ist, wobei die Kommunikation, d.h. das Senden und/oder Empfangen von Daten über den Datenbus (1), über ein beliebiges vorgegebenes (Busprotokoll)-erfolgt,
der Steuerabschnitt (7, 13, 19) einen Anwendungs-spezifischen Abschnitt (5, 12, 18) und einen Busprotokoll-spezifischen Abschnitt (4, 10, 17) umfasst, die voneinander entkoppelt sind und über eine vorgegebene, standardisierte Schnittstelle (6, 11, 20) Anwendungs-spezifische Daten austauschen,
dass der Busprotokoll-spezifische Abschnitt (4, 10, 17) zum Senden und/oder Empfangen von Daten über die Busschnittstelle (3, 9, 16) ausgebildet ist, **dadurch gekennzeichnet**
**dass** der Anwendungs-spezifische Abschnitt (5, 12, 18) für die Steuerung der Vorrichtung (2, 8, 14) unabhängig vom verwendeten Busprotokoll ausgebildet ist und
**dass** durch den Busprotokoll-spezifischen Abschnitt (4, 10, 17)
- über die standardisierte Schnittstelle (6, 11, 20) empfangene Daten in das Busprotokoll und/oder
- über die Busschnittstelle (3, 9, 16) empfangene Daten in entsprechende Anwendungs-spezifische Daten
umgesetzt werden.

2. Vorrichtung nach Anspruch 1,
**dadurch gekennzeichnet,**
**dass** der Steuerabschnitt (13, 19) mehrere Busprotokoll-spezifische Abschnitte (10, 17) umfasst, von denen jedes jeweils einem von einer Vielzahl von unterschiedlichen Busprotokollen zugeordnet ist und
**dass** jeder Busprotokoll-spezifische Abschnitt (10, 17) jeweils zur Umsetzung der Anwendungs-spezifischen Daten in das ihm zugeordnete Busprotokoll und/oder zur Umsetzung der über die Busschnittstelle (9, 16) in dem ihm zugeordneten Busprotokoll empfangenen Daten in die Anwendungs-spezifischen Daten ausgebildet ist.

3. Vorrichtung nach Anspruch 2,
**dadurch gekennzeichnet,**
**dass** jedem Busprotokoll-spezifischen Abschnitt (10, 17) eine unterschiedliche Busschnittstelle (9, 16) zugeordnet ist.

4. Vorrichtung nach Anspruch 2,
**dadurch gekennzeichnet,**
**dass** zumindest ein Teil oder alle Busprotokoll-spezifischen Abschnitte einer einzigen Busschnittstelle zugeordnet sind und dass eine Auswahleinheit zur Auswahl des jeweils zu verwendenden Busprotokoll-spezifischen Abschnitts vorgesehen ist.

5. Vorrichtung nach Anspruch 4,
**dadurch gekennzeichnet,**
**dass** über die Auswahleinheit eine manuelle Auswahl des Busprotokoll-spezifischen Abschnitts erfolgt.

6. Vorrichtung nach Anspruch 4,
**dadurch gekennzeichnet,**
**dass** die Auswahleinheit zur automatischen Auswahl des Busprotokoll-spezifischen Abschnitts abhängig von dem jeweils aktuell verwendeten Busprotokoll ausgebildet ist.

7. Vorrichtung nach einem der vorhergehenden Ansprüche,
**dadurch gekennzeichnet,**
**dass** für die Kommunikation mit dem Steuerabschnitt (7, 13, 19) eine Menge von Elementen vorgegeben ist, die jeweils eine Art von zulässigen Anwendungs-spezifischen Daten definieren, wobei als Elemente insbesondere Variablen und/oder Methoden und/oder Nachrichten und/oder Ereignisse vorgegeben sind.

8. Konfigurationsvorrichtung für eine einen Sensor oder Aktor bildende elektronische Vorrichtung (2, 8) nach einem der vorhergehenden Ansprüche, wobei die Konfigurationsvorrichtung (14) ebenfalls nach einem der vorhergehenden Ansprüche ausgebildet ist und der Anwendungs-spezifische Abschnitt (18) der Konfigurationsvorrichtung (14) einen Konfigurationsabschnitt bildet, dessen standardisierte Schnittstelle (20) gleich der standardisierten Schnittstelle (6, 11) der zu konfigurierenden Vorrichtung (2, 8) ist.

9. Konfigurationsvorrichtung nach Anspruch 8,
**dadurch gekennzeichnet,**
**dass** über die Konfigurationsvorrichtung (14) Anwendungs-spezifische vorgegebenen Einstellungen der zu konfigurierenden Vorrichtung (2, 8) auslesbar und/oder setzbar sind.

10. Konfigurationsvorrichtung nach Anspruch 8 oder 9,
**dadurch gekennzeichnet,**
**dass** die Konfigurationsvorrichtung (14) als Computer, insbesondere als PC oder Handheld (PDA), und der Konfigurationsabschnitt (18) sowie der Busprotokoll-spezifische Abschnitt (17) jeweils als Computerprogramme ausgebildet sind.

11. Bussystem mit einem Datenbus (1) und einer Vielzahl an den Datenbus (1) angeschlossenen , einen Sensor oder Aktor bildenden elektronische Vorrichtungen (2, 8, 14) nach einem der vorhergehenden Ansprüche.

## Claims

1. An electronic apparatus (2, 8, 14) forming a sensor or an actuator comprising a control engine (7, 13, 19) as well as an integrated bus interface (3, 9, 16) via which the apparatus (2, 8, 14) can be connected to a data bus (1) for the communication of the apparatus (2, 8, 14) with at least one further apparatus (2, 8, 14) connected to the data bus and forming a sensor or an actuator, wherein the communication, i.e. the transmission and/or reception of data, via the data bus (1), takes place via any desired bus protocol,
wherein the control engine (7, 13, 19) includes an application-specific engine (5, 12, 18) and a bus protocol-specific engine (4, 10, 17) which are decoupled from one another and exchange application-specific data via a pre-determined, standardized interface (6, 11, 20); wherein the bus protocol-specific engine (4, 10, 17) is made for the transmission and/or reception of data via the bus interface (3, 9, 16),
**characterized in that**
the application-specific engine (5, 12, 18) is made for the control of the apparatus (2, 8, 14) independently of the bus protocol used; and **in that**
- data received via the standardized interface (6, 11, 20) can be converted into the bus protocol by the bus-protocol-specific engine (4, 10, 17); and/or
- data received via the bus interface (3, 9, 16) can be converted into corresponding application-specific data by the bus-protocol-specific engine (4, 10, 17).

2. An apparatus in accordance with claim 1, **characterized**
**in that** the control engine (13, 19) includes a plurality of bus protocol-specific engines (10, 17) of which each is associated with a respective one of a plurality of different bus protocols; and
**in that** each bus protocol-specific engine (10, 17) is respectively made for the conversion of the application-specific data into the bus protocol associated with it and/or for the conversion of the data received via the bus interface (9, 16) in the bus protocol associated with it into the application-specific data.

3. An apparatus in accordance with claim 2, **characterized in that** a different bus interface (9, 16) is associated with each bus protocol-specific engine (10, 17).

4. An apparatus in accordance with clam 2, **characterized in that** at least some of or all of the bus protocol-specific engines are associated with a single bus interface; and **in that** a selection unit is provided for the selection of the respective bus protocol-specific engine to be used.

5. An apparatus in accordance with claim 4, **characterized in that** a manual selection of the bus protocol-specific engine takes place via the selection unit.

6. An apparatus in accordance with claim 4, **characterized in that** the selection unit is made for the automatic selection of the bus protocol-specific engine in dependence on the respective currently used bus protocol.

7. An apparatus in accordance with any one of the preceding claims, **characterized in that** a set of elements is predetermined for the communication with the control engine (7, 13, 19) which each define a type of permitted application-specific data, wherein in particular variables and/or methods and/or messages and/or events are pre-determined as the elements.

8. A configuration apparatus for an electronic apparatus (2, 8) forming a sensor or an actuator in accordance with any one of the preceding claims, wherein the configuration apparatus (14) is likewise made in accordance with any one of the preceding claims and the application-specific engine (18) of the configuration apparatus (14) forms a configuration engine whose standardized interface (20) is the same as the standardized interface (6, 11) of the apparatus (2, 8) to be configured.

9. A configuration apparatus in accordance with claim 8, **characterized in that** application-specific pre-determined settings of the apparatus (2, 8) to be configured can be read out and/or set via the configuration apparatus (14).

10. A configuration apparatus in accordance with claim 8 or claim 9, **characterized in that** the configuration apparatus (14) is made as a computer, in particular as a PC or as a handheld (PDA), and the configuration engine (18) as well as the bus protocol-specific engine (17) are each made as computer programs.

11. A bus system comprising a data bus (1) and a plurality of electronic apparatuses (2, 8, 14) forming a sensor or an actuator connected to the data bus (1) in accordance with any one of the preceding claims.

## Revendications

1. Dispositif électronique (2, 8, 14) formant détecteur ou actionneur, comportant une portion de commande (7, 13, 19) ainsi qu'une interface de bus intégrée (3, 9, 16) via laquelle le dispositif (2, 8, 14) est susceptible d'être connecté à un bus de données (1) pour la communication du dispositif (2, 8, 14) avec au moins un autre dispositif (2, 8, 14) formant détecteur ou actionneur et connecté au bus de données, la communication, c'est-à-dire l'émission et/ou la réception de données via le bus de données (1), s'effectue via un protocole de bus prédéterminé quelconque, la portion de commande (7, 13, 19) comprenant une portion (5, 12, 18) spécifique à l'application et une portion (4, 10, 17) spécifique au protocole de bus, qui sont découplées l'une de l'autre et échangent des données spécifiques à l'application via une interface standardisée prédéterminée (6, 11, 20),
la portion (4, 10, 17) spécifique au protocole de bus étant réalisée pour émettre et/ou recevoir des données via l'interface de bus (3, 9, 16),
**caractérisé en ce que**
la portion (5, 12, 18) spécifique à l'application pour la commande du dispositif (2, 8, 14) est réalisée indépendamment du protocole de bus utilisé, et
**en ce qu'**au moyen de la portion (4, 10, 17) spécifique au protocole de bus
- des données reçues via l'interface standardisée (6, 11, 20) sont converties en le protocole de bus et/ou
- des données reçues via l'interface de bus (3, 9, 16) sont converties en données correspondantes spécifiques à l'application.

2. Dispositif selon la revendication 1,
**caractérisé en ce que**
la portion de commande (13, 19) comprend plusieurs portions (10, 17) spécifiques au protocole de bus, dont chacune est associée à un protocole de bus respectif parmi une multitude de protocoles de bus différents, et **en ce que** chaque portion (10, 17) spécifique au protocole de bus est réalisée en vue d'une conversion des données spécifiques à l'application en le protocole de bus qui lui est associé et/ou en vue de la conversion des données, reçues via l'interface de bus (9, 16) dans le protocole de bus qui lui est associé, en les données spécifiques à l'application.

3. Dispositif selon la revendication 2,
**caractérisé en ce que**
à chaque portion (10, 17) spécifique au protocole de bus est associée une interface de bus différente (9, 16).

4. Dispositif selon la revendication 2,
**caractérisé en ce que**
une partie au moins ou toutes les portions spécifiques au protocole de bus sont associées à une seule interface de bus, et **en ce qu'**il est prévu une unité de sélection pour sélectionner la portion spécifique au protocole de bus respectivement à utiliser.

5. Dispositif selon la revendication 4,
**caractérisé en ce que**
une sélection manuelle de la portion spécifique au protocole de bus s'effectue via l'unité de sélection.

6. Dispositif selon la revendication 4,
**caractérisé en ce que**
l'unité de sélection est réalisée en vue d'une sélection automatique de la portion spécifique au protocole de bus, en fonction du protocole de bus respectif utilisé actuellement.

7. Dispositif selon l'une des revendications précédentes,
**caractérisé en ce que**
pour la communication avec la portion de commande (7, 13, 19), il est prévu une quantité d'éléments qui définissent chacun un type de données admissibles spécifiques à l'application, dans lequel des variables et/ou des méthodes et/ou des messages et/ou des événements sont imposés en particulier à titre d'éléments.

8. Dispositif de configuration pour un dispositif électronique (2, 8) formant détecteur ou actionneur, selon l'une des revendications précédentes, le dispositif de configuration (14) étant réalisé également selon l'une des revendications précédentes, et la portion (18) spécifique à l'application du dispositif de configuration (14) constituant une portion de configuration dont l'interface standardisée (20) est identique à l'interface standardisée (6, 11) du dispositif à configurer (2, 8).

9. Dispositif de configuration selon la revendication 8,
**caractérisé en ce que**
des réglages du dispositif à configurer (2, 8) prédéterminés et spécifiques à l'application sont susceptibles d'être lus et/ou établis.

10. Dispositif de configuration selon la revendication 8 ou 9,
**caractérisé en ce que**
le dispositif de configuration (14) est réalisé comme ordinateur, en particulier comme ordinateur personnel ou comme assistant numérique personnel (PDA), et **en ce que** la portion de configuration (18) ainsi que la portion (17) spécifique au protocole de bus sont réalisées chacune sous forme de programmes d'ordinateur.

11. Système de bus comportant un bus de données (1) et une multitude de dispositifs électroniques (2, 8, 14) formant détecteur ou actionneur connectés au bus de données (1), selon l'une des revendications précédentes.
